# EUROPÄISCHE PATENTSCHRIFT

(11) **EP 1 607 254 B1**
(45) Veröffentlichungstag und Bekanntmachung des Hinweises auf die Patenterteilung: **12.08.2009**
(21) Anmeldenummer: 05011651.6
(22) Anmeldetag: 31.05.2005
(51) Int. Cl.: B60H 1/00

(54) **Vorrichtung zur Luftzuführung in einen Innenraum eines Fahrzeuges**
Device for supplying air to the interior of a vehicle
Dispositif pour délivrer de l'air dans l'intérieur d'un véhicule automobile

(30) Priorität: 16.06.2004 DE 102004028784
(43) Veröffentlichungstag der Anmeldung: 21.12.2005
(73) Patentinhaber: Behr GmbH & Co. KG, 70469 Stuttgart (DE)
(72) Erfinder: Bosquet, Stéphane, 70195 Stuttgart (DE); Crochemore, Laurent, 59519 Möhnesee (DE); Schweizer, Gebhard, 71229 Leonberg (DE)
(74) Vertreter: Grauel, Andreas

(56) Entgegenhaltungen:
- EP-A- 1 323 555
- US-A- 4 665 971

## Beschreibung

Die Erfindung betrifft eine Vorrichtung zur Luftzuführung in einen Innenraum eines Fahrzeugs, insbesondere in den Fondbereich des Fahrzeugs, mit einem Gebläse zur Erzeugung eines Luftstroms und mit mindestens einem Strömungskanal.

Üblicherweise werden Fahrzeuge, z.B. Land-, Wasser- oder Luftfahrzeuge, insbesondere deren Innenräume, beheizt oder klimatisiert, indem eine mittels einer Klimaanlage entsprechend konditionierte Luft in den Innenraum geleitet wird. Hierzu sind beispielsweise an mehreren, als geeignet erachteten Stellen Strömungsauslässe oder Ausströmpunkte vorgesehen, die über einen Strömungskanal mit einer Heizungs- und/oder Klimaanlage verbunden sind. Im Allgemeinen ist eine solche Heizungs- und/oder Klimaanlage im Frontbereich eines Fahrzeuges angeordnet, wodurch primär die vorne sitzenden Passagiere mit konditionierter Luft versorgt werden. Für Personen, die im hinteren Bereich des Innenraumes sitzen, ist es besonders komfortabel, wenn die zugeführte Luft durch zusätzliche Strömungskanäle auch in den hinteren Bereich geleitet wird und erst dort austritt. Auf diese Weise wird der thermische Komfort beeinflusst, insbesondere werden unangenehme Zugerscheinungen durch erhöhte Strömungsgeschwindigkeiten innerhalb des Innenraumes verringert, beispielsweise dann, wenn die Passagiere unterschiedliche Wünsche hinsichtlich der Klimatisierung haben.

Aus der DE 39 40 361 A1 ist dazu eine Heizungs- und/oder Klimaanlage bekannt, die ein im Frontbereich des Innenraumes angeordnetes Heiz-und/oder Klimagerät aufweist, von dem aus Luftverteilungskanäle zu Luftaustrittsöffnungen abzweigen, wobei zum Fondraum ein Luftverteilungskanal mit zumindest einer Luftaustrittsöffnung zum Belüften führt. Die Luftaustrittsöffnung ist dabei über eine Steuerklappe absperrbar, wobei deren Bedienungselemente im Fondraum angeordnet sind. Darüber hinaus führt ein zweiter Luftleitkanal zum Fondraum. Die Luftleitkanäle können jeweils aufgeheizte oder gekühlte Luft führen und münden beide vor der Luftaustrittsöffnung in einen Mischraum.

In DE 102 41 460 A1 wird ebenfalls eine Klimaanlage mit einem Klimagerät beschrieben, in dem mindestens ein Gebläse, mindestens ein Verdampfer und mindestens ein Heizungswärmetauscher angeordnet sind und von dem aus Luftkanäle zu Luftaustritten führen, die verschiedenen Zonen eines Kraftfahrzeugs zugeordnet sind. Dabei sind getrennte Luftkanäle für kalte Luft und getrennte Luftkanäle für warme Luft vorgesehen, die vom Klimagerät jeweils zu einem Regelungsmodul für jede Zone führen. Die Luftmenge und die Lufttemperatur können für jede Zone unabhängig voneinander eingestellt werden.

Weiterhin ist es bekannt, ein zweites Klimagerät mit separaten Strömungskanälen im Fondbereich anzuordnen, mittels dessen der hintere Innenraum mit konditionierter Luft versorgt werden kann. Dies bedeutet jedoch einen deutlich höheren Kostenaufwand gegenüber einem einzelnen Klimagerät. Bei allen bekannten Klimaanlagen beziehungsweise Heizungsanlagen ist problematisch, dass sie durch die erforderliche Leistung viel Bauraum benötigen und zudem ein hohes Gewicht des Fahrzeugs aufweisen.

Zusätzlichen Komfort kann ferner eine Klimabox bieten, in der Lebensmittel oder andere Güter gekühlt, erwärmt oder warm gehalten werden können. Eine solche ist beispielsweise aus DE 198 11 185 C1 bekannt.

Aus der US 4,665,971 ist eine Klimaanlage für ein Fahrzeug mit einem Teil der die vorderen Sitzplätze versorgt und einem Teil der die hinteren Sitzplätze versorgt bekannt. Dabei weist das System ein Hauptgebläse auf, sowie ein weiteres Gebläse, angeordnet in einer Rücksitzgebläseeinheit.

Ferner zeigt die EP 1 323 555 A1 eine Klimatisierungsvorrichtung mit einer ersten Luftzirkulationsvorrichtung für einen vorderen Bereich und einer zweiten Luftzirkulationsvorrichtung für einen hinteren Bereich eines Fahrzeugs.

Der Erfindung liegt daher die Aufgabe zugrunde, eine verbesserte Vorrichtung zur Luftzuführung in einen Innenraum eines Fahrzeugs anzugeben, welche insbesondere einen verbesserten thermischen Komfort im Fahrzeug ermöglicht und weniger Bauraum benötigt. Darüber hinaus ist ein besonders geeignetes Verfahren zur Luftzuführung in einen Innenraum eines Fahrzeugs anzugeben.

Erfindungsgemäß wird die Aufgabe hinsichtlich der Vorrichtung zur Luftzuführung durch die Merkmale des Anspruchs 1 gelöst.

Vorteilhafte Weiterbildungen der Erfindung sind Gegenstand der Unteransprüche.

Die Erfindung geht dabei von der Überlegung aus, dass für eine sowohl einen geringen Bauraum aufweisende Vorrichtung zur Luftzuführung in einen Innenraum eines Fahrzeugs, insbesondere in den Fondbereich als auch einen besseren thermischen Komfort im Fondbereich bewirkende Vorrichtung zur Luftzuführung diese hinsichtlich eines in einem Strömungskanal zu führenden Luftstroms individuell steuerbar sein sollte. Hierzu ist vorgesehen, dass zusätzlich zu einem strömungseingangsseitig angeordneten Hauptgebläse eines Klimageräts zur Erzeugung eines zu klimatisierenden Luftstroms im Strömungskanal strömungsausgangsseitig ein Zusatzgebläse vorgesehen ist.

Ein zusätzlich zum Gebläse (= Hauptgebläse) strömungsausgangsseitig angeordnetes Zusatzgebläse verringert die am Hauptgebläse zur Verfügung zu stellende Förderleistung, wodurch das Hauptgebläse kleiner dimensioniert ausgebildet ist. Dies wiederum führt zu einem geringen Gewicht und zu einem besonders kleinen Bauraum.

Vorzugsweise ist das Zusatzgebläse im Bereich eines Strömungsauslasses angeordnet, der strömungsausgangsseitig am Strömungskanal in den Innenraum mündet. Hierdurch sind der Energieverbrauch sowie die maximale Förderleistung des Hauptgebläses besonders einfach aufeinander einstellbar.

Der Strömungskanal ist in mindestens zwei Teilkanäle unterteilt als ein Mehrkammerkanal mit mehreren Kammerkanälen ausgebildet . Die Unterteilung in zumindest zwei Teilkanäle kann mittels einer flexiblen, elastischen, faltbaren und/oder verschiebbaren Trennwand TW erfolgen. Getrennte Strömungskanäle beziehungsweise Kammerkanäle eines Mehrkammerkanals, in welchen jeweils warme und/oder kalte Luft geführt wird, ermöglichen eine individuelle Einstellung einer gewünschten Lufttemperatur an betreffenden Strömungsauslässen.

Je nach Art und Ausbildung der Vorrichtung zur Luftzuführung kann bzw. können dabei im Strömungskanal ein oder mehrere Zusatzgebläse angeordnet sein. Jeweils ein Zusatzgebläse oder zumindest ein zusätzliches Gebläselaufrad ist an jeden Teilkanal oder Kammerkanal angeschlossen.Wodurch eine getrennte Luftführung ohne Durchmischung der Luftströme der einzelnen Kanäle sowie strömungsausgangsseitig eine gezielte Einstellung der jeweiligen Strömungsmenge und Strömungsstärke möglich ist.

Zweckmäßigerweise ist dem Zusatzgebläse ein Mischelement vor- und/oder nachgeschaltet. Beispielsweise ist das Mischelement zwischen dem Zusatzgebläse und dem Strömungsauslass angeordnet. Mittels des zwischen dem Zusatzgebläse und dem Strömungsauslass angeordneten Mischelements kann ein fein dosierbares Mischen von kaltem und warmem Luftstrom erfolgen, wobei die Teilkanäle oder Mehrkammerkanäle in einen gemeinsamen Strömungsauslass münden. Besonders für Passagiere, die im Fond sitzen, kann mit einer derartigen, individuell temperierbaren Luftzuführung ein komfortables Klima geschaffen werden. Insbesondere kann die Klimatisierung im Fußbereich verbessert werden. Dabei erhöht eine Bedienung des oder der Zusatzgebläse von den hinteren Sitzplätzen aus den Komfort, da die hinteren Passagiere nicht mehr auf die Bedienungshandlungen der vorderen Passagiere angewiesen sind. Hierzu ist das Zusatzgebläse nach Bedarf einschaltbar und/oder einstellbar ausgebildet, wobei das Zusatzgebläse insbesondere von einer im Fondbereich sitzenden Person zu- bzw. einstellbar ist. Alternativ oder zusätzlich ist das Zusatzgebläse zentral, z. B. vom Cockpit oder einer Bedieneinheit der Klimaanlage, zu- bzw. einstellbar. Somit ermöglicht das Zusatzgebläse eine energiesparende und je nach Strömungsauslass individuelle Einstellung der Luftzuführung in den Fahrzeuginnenraum.

Zweckmäßigerweise ist im Strömungskanal mindestens ein Strömungssteuerelement angeordnet. Vorzugsweise ist das Strömungssteuerelement zwischen einer ersten, den Strömungskanal für einen Warmluftstrom vollständig öffnenden Stellung und einer zweiten, den Strömungskanal für einen Kaltluftstrom vollständig öffnenden Stellung bewegbar angeordnet. Bei einer Unterteilung des Strömungskanals in Teilkanäle oder Kammerkanäle ist das Strömungssteuerelement vorteilhafterweise in eine Zwischenstellung für eine im Strömungskanal, insbesondere in Teilkanäle oder Kammerkanäle getrennte Führung von Kaltluftstrom und Warmluftstrom bewegbar. Durch eine derartige individuelle Einstellung von Kaltluftstrom und/oder Warmluftstrom im Strömungskanal ist es ermöglicht, dass beispielsweise bei Benutzen mehrerer Teilkanäle oder Kammerkanäle nur für Kaltluft oder Warmluft ein maximaler Kaltluftstrom bzw. Warmluftstrom, insbesondere in den Fondbereich geführt wird. Dadurch kann die Dauer bis zum Erreichen einer vorgegebenen Innenraumtemperatur für den Fondbereich deutlich verkürzt werden. Nachdem die vorgegebene Innenraumtemperatur erreicht ist, kann beispielsweise die Strömungssteuereinrichtung wieder so eingestellt werden, dass die Warmluft nur in den Warmluftkanal (= Teilkanal) und die Kaltluft nur in den Kaltluftkanal (= Teilkanal) strömt.

Vorteilhafterweise ist strömungsausgangsseitig am Strömungskanal eine Klimabox angeordnet. Eine Klimabox, die sowohl an einen Strömungskanal oder an einen Kammerkanal für warme Luft als auch an einen Strömungskanal oder an einen Kammerkanal für kalte Luft angeschlossen ist, ermöglicht das komfortable Kühlen, Erwärmen oder Warmhalten unabhängig von der aktuellen Einstellung der Klimaanlage oder Heizung.

Durch ein eigenes Mischelement kann die Temperatur innerhalb der Klimabox automatisch möglichst konstant gehalten werden, auch wenn sich die Temperaturen der zugeführten Warm- und Kaltluft ändern. Dabei ist auch die Überwachung der Lufttemperaturen möglich, um bei Über- oder Unterschreitung von unteren und oberen Grenztemperaturen die Luftzuführung vollständig zu sperren. Dies kann insbesondere dann erfolgen, wenn in Warm- und Kaltluftkanal zur Beschleunigung der Luftzuführung Luft derselben Temperatur geführt wird.

Die mit der Erfindung erzielten Vorteile bestehen insbesondere darin, dass der thermische Komfort, insbesondere für Insassen im Fondbereich verbessert ist. Zudem weist die Vorrichtung einen besonders kleinen Bauraum auf, da das Hauptgebläse gegenüber herkömmlichen Hauptgebläsen wesentlich kleiner dimensioniert ist. Auch ist eine Mehrzonen-Klimatisierung im Fahrzeuginnenraum ermöglicht. Darüber hinaus kann besonders einfach eine Kühlbox ohne zusätzliche Kältequelle gekühlt oder auch als Warmhaltebox verwendet werden, indem die Kühlbox gewärmt wird.

Vorteilhafterweise sind zumindest ein oder mehrere im Fahrzeug verlaufende Strömungskanäle, insbesondere die zur Warmhalte- oder Kühlbox führenden Strömungskanäle, thermisch isoliert.

Die Erfindung wird im Folgenden anhand von Ausführungsbeispielen näher erläutert. Darin zeigen:
- Figur 1: schematisch eine Vorrichtung zur Luftzuführung in einen Innenraum eines Fahrzeugs, insbesondere für eine modulare 4-Zonen-Klimatisierung des Innenraums,
- Figuren 2A bis 2C: schematisch Teilkanäle eines Strömungskanals für Warm/Kaltluft für eine Luftzuführung in den hinteren Fahrzeuginnenraum,
- Figuren 3A bis 3C: schematisch einen als Mehrkammerkanal ausgebildeten Strömungskanal mit einer flexiblen Trennwand, und
- Figuren 4A, 4B: schematisch das Prinzip einer an einen Strömungskanal angeschlossenen Kühlbox.

Einander entsprechende Teile sind in allen Figuren mit den gleichen Bezugszeichen versehen.

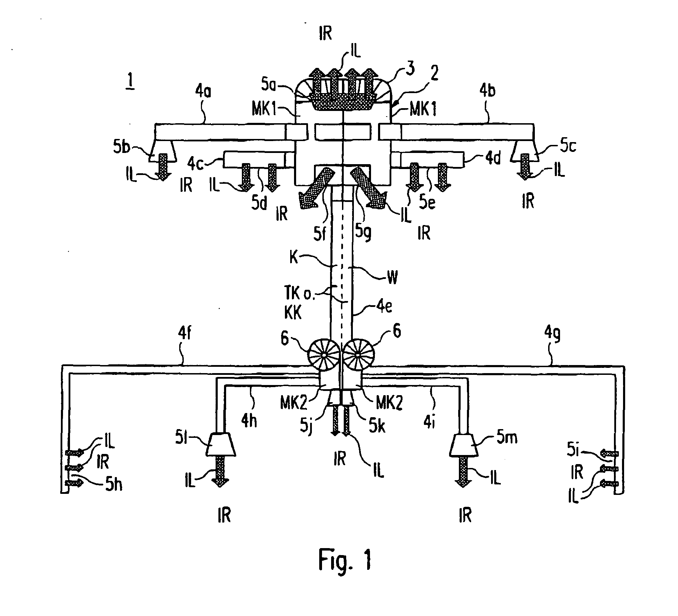

In Figur 1 ist eine Vorrichtung 1 zur Luftzuführung in einen Innenraum IR eines Fahrzeugs, insbesondere für eine modulare 4-Zonen-Klimatisierung dargestellt. Die Vorrichtung 1 umfasst ein Klimagerät 2 mit einem strömungseingangsseitig angeordneten Gebläse 3 (auch Hauptgebläse genannt) zum Zuführen von Frischluft oder Umluft, welche mittels des Klimageräts 2 klimatisiert wird. An das Klimagerät 2 sind zur Verteilung der klimatisierten Luft IL und deren Zuführung an verschiedenen Stellen in den Innenraum IR Strömungskanäle 4a bis 4i angeschlossen. Das Klimagerät 2 befindet sich wie üblich im Frontbereich des nicht abgebildeten Fahrzeuges und dient der Erzeugung sowohl von Warmluft W als auch von Kaltluft K. Die Strömungskanäle 4 weisen eine Anzahl von Strömungsauslässen 5a bis 5m auf, die in den Innenraum IR des Fahrzeugs münden.

In einer möglichen Ausführungsform sind die Strömungskanäle 4a bis 4d für die Belüftung und Beheizung des Frontbereichs des Fahrzeugs einkanalig ausgebildet. D.h. für den Frontbereich erfolgt das Mischen der Warmluft W und der Kaltluft K zur klimatisierten Luft IL, die dem Innenraum I zugeführt wird, innerhalb des Klimageräts 2, insbesondere in einer ersten Mischkammer MK1. Dabei kann die erste Mischkammer MK1 einteilig oder mehrteilig ausgebildet sein. Die klimatisierte Luft IL wird nach Mischung in der ersten Mischkammer MK1 durch die Strömungskanäle 4a bis 4d geführt und tritt durch die zugehörigen Strömungsauslässe 5a bis 5g im Frontbereich, beispielsweise durch den Strömungsauslass 5a für den Betrieb "Defrost" zur Scheibenenteisung, durch die Strömungsauslässe 5d, 5e in den Frontfußraum, durch die Strömungsauslässe 5f, 5g in die Innentaummitte und durch die Strömungsauslässe 5b, 5c an der Fahrzeugseite in den Innenraum IR aus.

Alternativ zu den einkanalig ausgebildeten Strömungskanälen 4a bis 4d für den Frontbereich können diese auch mehrkanalig, d.h. für eine getrennte Führung von Kaltluft K und Warmluft W ausgebildet sein. In diesem Ausführungsbeispiel wird dann die klimatisierte Luft IL unmittelbar im Bereich der Strömungsauslässe 5a bis 5g durch Mischen der Kaltluft K und der Warmluft W erzeugt.

Zur Belüftung und Beheizung des Fondbereichs, d.h. des hinteren Sitzbereichs im Innenraum IR, führt der Strömungskanal 4e von dem Klimagerät 2 zu den Strömungsauslässen 5h bis 5m. Um eine möglichst hinreichend gute Klimatisierung auch im hinteren Bereich des Innenraums IR zu erzielen, ist der Strömungskanal 4e zur separaten Führung von Warmluft W und Kaltluft K mehrkanalig ausgeführt. Beispielsweise ist der Strömungskanal 4e unterteilt in mehrere separate Teilkanäle TK oder als ein Mehrkammerkanal ausgebildet, der mehrere Kammerkanäle KK umfasst. Der Strömungskanal 4e läuft in den hinteren Bereich des Fahrzeugs und weist dort strömungsausgangsseitig ein Zusatzgebläse 6 auf. Je nach Art und Ausführung des Strömungskanals 4e - einkanalig oder mehrkanalig - umfasst dieser ein gemeinsames Zusatzgebläse 6 bzw. kanalbezogen je Kanal TK oder KK ein einzelnes Zusatzgebläse oder zumindest ein zusätzliches Gebläselaufrad. In der Figur 1 ist ein zweikanaliger Strömungskanal 4e dargestellt, der strömungsausgangsseitig je Kanal TK oder KK ein Zusatzgebläse 6 oder ein Zusatzgebläse 6 mit zwei Gebläselaufrädern aufweist.

Das Zusatzgebläse 6 ist als ein Boostergebläse ausgeführt. Dem Zusatzgebläse 6 ist beispielsweise als Mischelement zur Mischung der Warmluft W und der Kaltluft K eine zweite Mischkammer MK2 nachgeschaltet, die wiederum kanalbezogen und somit zweiteilig oder als eine gemeinsame Mischkammer MK2 für beide Kanäle TK oder KK ausgebildet sein kann. An die zweite Mischkammer MK2 sind die Strömungskanäle 4f bis 4i angeschlossen, die in die Strömungsauslässe 5h bis 5m münden. Über den Strömungsauslass 5l bzw. 5m wird der Fondfußraum versorgt, über den Strömungsauslass 5h bzw. 5i erfolgt die seitliche Luftzuführung in den Innenraum IR von der B-Säule des Fahrzeugs aus. Zudem wird durch einen Strömungsauslass 5j bzw. 5k, der strömungsausgangsseitig im Bereich der zweiten Mischkammer MK2 angeordnet ist, die klimatisierte Luft IL mittig in den hinteren Innenraum IR und somit in den Fondbereich geführt.

Das oder die Zusatzgebläse 6 werden in diesem Beispiel ebenso wie die zweite Mischkammer MK2 durch eine nicht abgebildete Klimaautomatik geregelt, die von im Fond sitzenden Personen bedient, d.h. eingeschaltet oder eingestellt, werden kann. Wahlweise kann die Bedienung auch zentral, z. B. von dem Fahrer oder einem Insassen im Frontbereich, aus erfolgen, wenn hinten Kinder sitzen oder dort gar niemand sitzt. Auch eine manuelle Einstellung des oder der Zusatzgebläse 6 und/oder der zweiten Mischkammer MK2 ist möglich.

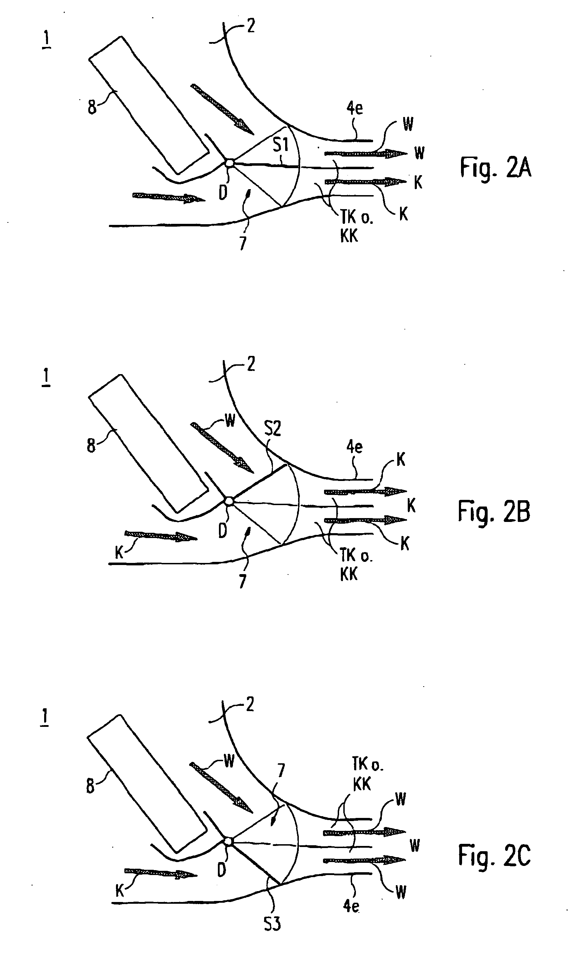

In den Figuren 2A bis 2C ist ein zwischen dem Klimagerät 2 und dem als Zweikammerkanal ausgebildeten Strömungskanal 4e angeordnetes Strömungssteuerelement 7 in drei verschiedenen Stellungen S1 bis S3 dargestellt. In Figur 2A ist das Strömungssteuerelement 7 in die Stellung S1 (= Mittelstellung) gebracht. Bei dem Strömungssteuerelement 7 handelt es sich beispielsweise um eine um eine Drehachse D schwenkbare Mischklappe oder Schwenkklappe. Durch die Anordnung des Strömungssteuerelement 7 in Mittelstellung ist der Strömungskanal 4e in die beiden Kanäle TK bzw. KK unterteilt. In den einen Teilkanal TK bzw. Kammerkanal KK - beispielsweise dem unteren - wird von dem Klimagerät 2 Kaltluft K hineingeführt. Von einem Heizelement 8 des Klimageräts 2 strömt in den anderen der beiden Kanäle TK bzw. KK - beispielsweise dem oberen - des Strömungskanals 4e Warmluft W.

Im Betrieb der Vorrichtung 1 können nun durch eine Steuerung des Klimageräts 2, des Strömungssteuerelements 7 sowie der Zusatzgebläse 6 und des Heizelements 8 verschiedene Klimatisierungsstufen, insbesondere eine Mehrzonenklimatisierung eingestellt werden. Ist der Fahrzeuginnenraum beispielsweise im Hochsommer stark aufgeheizt, ist eine schnelle Abkühlung gewünscht Dazu wird das Strömungssteuerelement 7, wie in Figur 2B dargestellt, in die Stellung S2 bewegt, insbesondere geschwenkt, so dass das Strömungssteuerelement 7 die Zufuhr der Warmluft W von dem Klimagerät 2 in den Strömungskanal 4e absperrt und gleichzeitig ausschließlich Kaltluft K in den Strömungskanal 4e und somit in beide Teilkanäle TK bzw. Kammerkanäle KK strömt. Analog wird beispielsweise im Winter ein schnelles Aufheizen gewünscht. Zu diesem Zweck kann das Strömungssteuerelement 7 in eine dritte Stellung S3 umgestellt werden, so dass die Zufuhr von Kaltluft K aus dem Klimagerät 2 abgesperrt ist und gleichzeitig ausschließlich Warmluft W in den Strömungskanal 4e und dessen sämtliche Kanäle TK bzw. KK strömt. Auf diese Weise wird ein maximaler Luftmengenstrom pro Zeiteinheit erreicht.

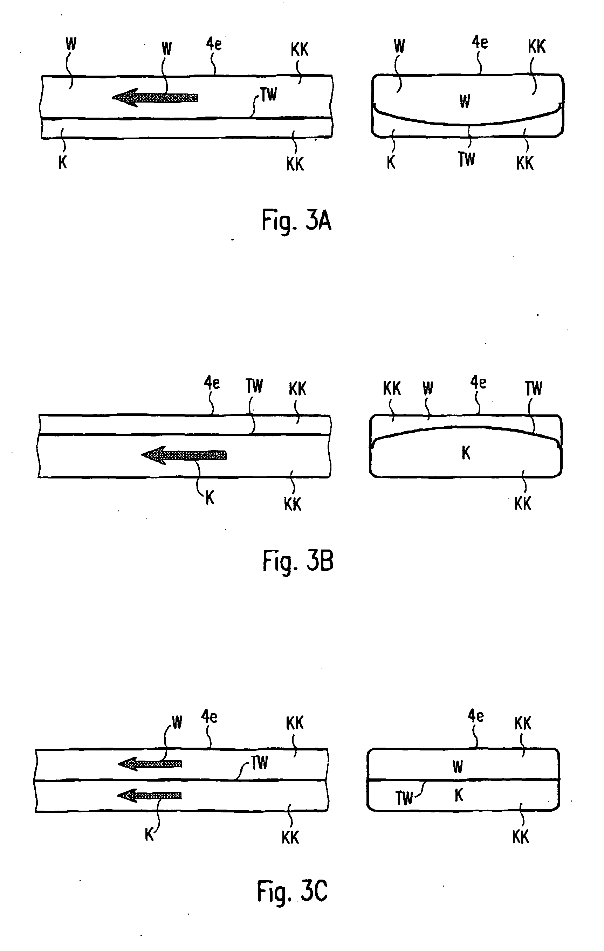

Je nach Ausführungsform ist der Strömungskanal 4e mit getrennten Teilkanälen TK oder mit Kammerkanälen KK versehen. Der als Mehrkammerkanal ausgebildete Strömungskanal 4e kann dabei mit einer flexiblen, elastischen, faltbaren und/oder verschiebbaren Trennwand TW ausgeführt sein und ist in den Figuren 3A bis 3C jeweils im Längsschnitt und im Querschnitt dargestellt.

In dem in Figur 3C gezeigten Fall sind bei gleichem Druck der in dem jeweiligen Kammerkanal KK geführten Warmluft W und Kaltluft K die Abmessungen der beiden Kammerkanäle KK gleich groß. Wird der Druck der Warmluft W erhöht, weil beispielsweise ein erhöhter Bedarf besteht und vorgegeben ist, so wird der Warmluftstrom strömungseingangsseitig vergrößert und die Trennwand TW, wie in Figur 3A dargestellt, beult aus, so dass sich das Volumen des Warmluftkanals vergrößert und mehr Warmluft W transportiert werden kann. Analog ergibt sich bei Druckerhöhung der Kaltluft K wie in Figur 3A ein vergrößertes Volumen für den betreffenden Kaltluftkanal.

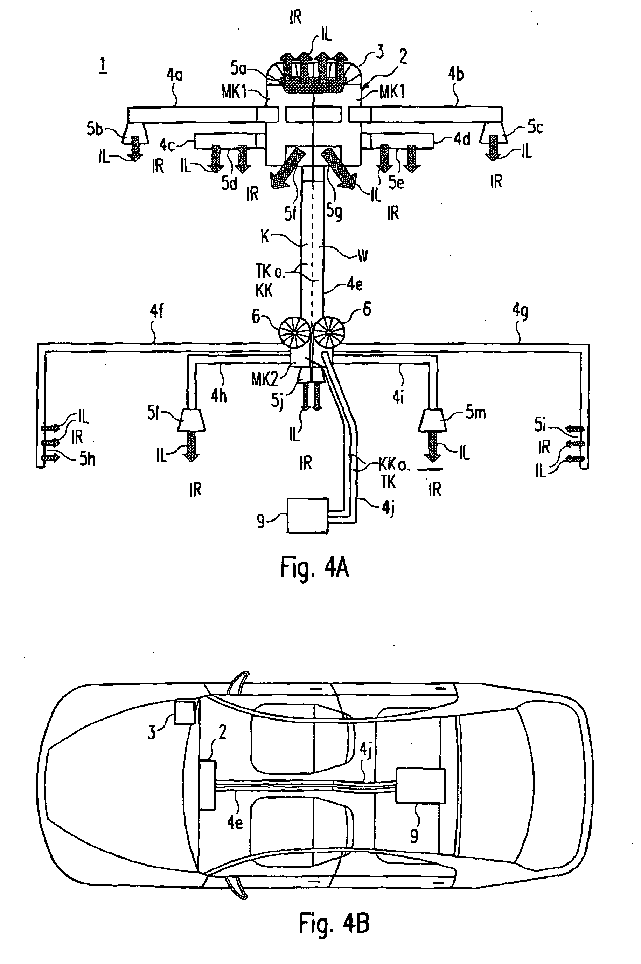

Figur 4A zeigt im wesentlichen die Vorrichtung 1 gemäß Figur 1. Zusätzlich ist eine Klimabox 9 über einen weiteren, von dem Strömungskanal 4e abzweigenden und als Zweikammerkanal ausgebildeten Strömungskanal 4j mit der zweiten Mischkammer MK 2 nach dem Zusatzgebläse 6 angeschlossen. In dem Strömungskanal 4j kann strömungsausgangsseitig im Bereich des Strömungseingangs für die Klimabox 9 ein zusätzliches, nicht dargestelltes Mischelement angeordnet sein, das eine voreingestellte Temperatur durch entsprechendes Mischen der in den betreffenden Kanälen TK bzw. KK geführten Warmluft W und Kaltluft K bewirkt, so dass die Klimabox 9 wie gewünscht gekühlt bzw. gewärmt wird, so dass sie als Kühlbox bzw. als Warmhaltebox verwendet werden kann.

Ist ein Mischen zur voreingestellten Temperatur nicht möglich, wird die Luftzuführung gesperrt. Dies könnte beispielsweise der Fall sein, wenn im Winter eine maximale Beheizung des Innenraums IR erforderlich ist und dazu auch der Kaltluftkanal Warmluft W führt, die Klimabox 9 aber auf eine kühlere Temperatur eingestellt ist. In einer besonders einfachen Ausführungsform kann die Temperierung der Klimabox 9 alternativ auf Kühlen, Erwärmen oder Sperren der Temperierung eingestellt werden, wodurch der jeweils entsprechende Kanal TK bzw. KK des Strömungskanals 4j geöffnet und der jeweils andere abgesperrt beziehungsweise beide abgesperrt werden, was mit einem einfachen, mechanischen Dreiwegeventil erreichbar ist. Figur 4B zeigt die Klimabox 9 in der Mitte der Rückbank. Zur Temperierung der Klimabox 9 ist diese über die als Zweikammerkanäle ausgebildeten Strömungskanäle 4e und 4j an das Klimagerät 2 angeschlossen.

### Bezugszeichenliste

- 1: Vorrichtung zur Luftzuführung
- 2: Klimagerät
- 3: Gebläse (= Hauptgebläse)
- 4a bis 4j: Strömungskanäle
- 5a bis 5m: Strömungsauslässe
- 6: Zusatzgebläse
- 7: Strömungssteuerelement, z. B. Mischklappe
- 8: Heizkörper
- 9: Klimabox

- D: Drehachse
- IL: klimatisierte Luft für den Innenraum eines Fahrzeugs
- IR: Innenraum eines Fahrzeugs
- K: Kaltluft
- KK: Kammerkanal
- MK1: erste Mischkammer
- MK2: zweite Mischkammer
- TK: Teilkanal
- TW: Trennwand eines Strömungskanals
- W: Warmluft

## Patentansprüche

1. Vorrichtung (1) zur Luftzuführung in einen Innenraum (IR) eines Fahrzeugs, mit einem strömungseingangsseitig angeordneten Gebläse (3) zur Erzeugung eines klimatisierten Luftstroms (IL) und mit mindestens einem Strömungskanal (4a bis 4j), in welchem strömungsausgangsseitig mindestens ein Zusatzgebläse (6) angeordnet ist, **dadurch gekennzeichnet, dass** der Strömungskanal (4e, 4j) in mindestens zwei Teilkanäle (TK) unterteilt ist, wobei je Teilkanal (TK) strömungsausgangsseitig ein zugehöriges Zusatzgebläse (6) oder zumindest ein zusätzliches Gebläselaufrad angeordnet ist.

2. Vorrichtung nach dem Oberbegriff des Anspruchs 1, **dadurch gekennzeichnet, dass** der Strömungskanal (4e, 4j) als ein Mehrkammerkanal ausgebildet ist und je Kammerkanal (KK) strömungsausgangsseitig ein zugehöriges Zusatzgebläse (6) oder zumindest ein zusätzliches Gebläselaufrad angeordnet ist.

3. Vorrichtung nach Anspruch 1, wobei der Strömungskanal (4a bis 4j) in mindestens einen in den Innenraum (IR) führenden Strömungsauslass (5a bis 5m) mündet und das Zusatzgebläse (6) im Bereich des Strömungsauslasses (5j) angeordnet ist.

4. Vorrichtung nach einem der Ansprüche 1 oder 3, wobei der Strömungskanal (4e, 4j) durch eine elastische, formbare, faltbare und/oder verschiebbare Trennwand (TW) in zumindest zwei Teilkanäle (TK) unterteilt ist.

5. Vorrichtung nach einem der Ansprüche 1 bis 4, wobei dem Zusatzgebläse (6) ein Mischelement, insbesondere eine Mischkammer (MK2) nachgeschaltet ist.

6. Vorrichtung nach Anspruch 5, wobei das Mischelement zwischen dem Zusatzgebläse (6) und dem Strömungsauslass (5j) angeordnet ist.

7. Vorrichtung nach einem der Ansprüche 1 bis 6, wobei das Zusatzgebläse (6) nach Bedarf einschaltbar und/oder einstellbar ist.

8. Vorrichtung nach einem der Ansprüche 2 bis 7, wobei der Strömungsauslass (5h bis 5m) in den Fondbereich, insbesondere den hinteren Sitzbereich des Innenraums (IR) mündet.

9. Vorrichtung nach einem der Ansprüche 1 bis 8, wobei das Zusatzgebläse (6) zentral oder dezentral, insbesondere vom hinteren Sitzbereich bedienbar ist.

10. Vorrichtung nach einem der Ansprüche 1 bis 9, wobei im Strömungskanal (4e, 4j) mindestens ein Strömungssteuerelement (7) angeordnet ist.

11. Vorrichtung nach Anspruch 10, wobei das Strömungssteuerelement (7) zwischen einer ersten, den Strömungskanal (4e, 4j) für einen Warmluftstrom vollständig öffnenden Stellung (S3) und einer zweiten, den Strömungskanal (4e, 4j) für einen Kaltluftstrom vollständig öffnenden Stellung (S2) bewegbar angeordnet ist.

12. Vorrichtung nach Anspruch 10 oder 11, wobei das Strömungssteuerelement (7) in einer Zwischenstellung (S1) für eine im Strömungskanal (4e, 4j) getrennte Führung von Kaltluftstrom und Warmluftstrom bewegbar ist.

13. Vorrichtung nach einem der Ansprüche 1 bis 12, wobei strömungsausgangsseitig am Strömungskanal (4e) eine Klimabox (9) angeordnet ist.

14. Vorrichtung nach Anspruch 13, wobei ein vom Strömungskanal (4e) abgezweigter Strömungskanal (4j) zur Klimatisierung der Klimabox (9) vorgesehen ist.

15. Vorrichtung nach Anspruch 14, wobei das Zusatzgebläse (6) im Strömungskanal (4e) vor dem abgezweigten Strömungskanal (4j) angeordnet ist.

16. Vorrichtung nach einem der Ansprüche 13 bis 15, wobei strömungsausgangsseitig im Strömungskanal (4e), insbesondere im Bereich des abgezweigten Strömungskanals (4j) für die Klimabox (9) ein zugehöriges Mischelement, insbesondere eine Mischkammer (MK2) angeordnet ist.

17. Vorrichtung nach einem der Ansprüche 13 bis 16, wobei die Klimabox (9) als Kühl- und/oder Warmhaltebox ausgebildet ist.

18. Vorrichtung nach einem der Ansprüche 1 bis 17, wobei zumindest ein Strömungskanal (4a bis 4j) thermisch isoliert ausgebildet ist.

## Claims

1. Device (1) for supplying air to an interior space (IR) of a vehicle, with a blower (3) arranged at a flow inlet and for generating a conditioned air stream IL) and with at least one flow duct (4a to 4j), in which at least one additional blower (6) is arranged, **characterised in that** the flow duct (4e, 4j) is divided into at least two part-ducts (TK), and an associated additional blower (6) or at least an additional blower fan-wheel is arranged at the flow outlet end in each part-duct (TK).

2. Device according to the preamble of Claim 1, **characterised in that** the flow duct (4e, 4j) is made as a multi-chamber duct, and an associated additional blower (6) or at least an additional blower fan-wheel is arranged at the flow outlet end in each duct chamber (KK).

3. Device according to Claim 1, such that the flow duct (4a to 4j) opens into at least one flow outlet (5a to 5m) that leads to the interior space (IR), and the additional blower (6) is arranged in the area of the flow outlet (5j).

4. Device according to either of Claims 1 or 3, such that the flow duct (4e, 4j) is divided by an elastic, pliable, foldable and/or displaceable partition wall (TW) into at least two part-ducts (TK).

5. Device according to any of Claims 1 to 4, such that a mixing element, in particular a mixing chamber (MK2) is located downstream from the additional blower (6).

6. Device according to Claim 5, the mixing element is located between the additional blower (6) and the flow outlet (5j).

7. Device according to any of Claims 1 to 6, such that the additional blower (6) can be switched on and off, or adjusted, according to need.

8. Device according to any of Claims 2 to 7, such that the flow outlet (5h to 5m) opens into the rear area, in particular the rear seat area of the interior space (IR).

9. Device according to any of Claims 1 to 8, such that the additional blower (6) can be operated centrally or de-centrally, in particular from the rear seat area.

10. Device according to any of Claims I to 9, such that at least one flow control element (7) is arranged in the flow duct (4e, 4j).

11. Device according to Claim 10, such that the flow control element (7) is arranged to move between a first position (S3) in which it completely opens the flow duct (4e, 4j) for a flow of warm air, and a second position (S2) in which it completely opens the flow duct (4e, 4j) for a flow of cold air.

12. Device according to Claims 10 or 11, such that the flow control element (7) can be moved to an intermediate position (S1) for the separate delivery of a cold air flow and a warm air flow to the flow duct (4e, 4j).

13. Device according to any of Claims 1 to 12, such that a cooling box (9) is arranged at the flow outlet end in the flow duct (4e).

14. Device according to Claim 13, such that a flow duct (4j) for air-conditioning the cooling box (9) is provided, which branches off from the flow duct (4e).

15. Device according to Claim 14, such that the additional blower (6) is arranged in the flow duct (4e) upstream from the branching flow duct (4j).

16. Device according to any of Claims 13 to 15, such that an associated mixing element, in particular a mixing chamber (MK2), is arranged at the flow outlet end in the flow duct (4e), in particular in the area of the branching flow duct (4j) for the cooling box (9).

17. Device according to any of Claims 13 to 16, such that the cooling box (9) is made as a cold-retaining and/or as a heat-retaining box.

18. Device according to any of Claims 1 to 17, such that at least one flow duct (4a to 4j) is thermally insulated.

## Revendications

1. Dispositif (1) pour fournir de l'air dans l'habitacle (IR) d'un véhicule, comprenant une soufflante (3) disposée côté entrée d'écoulement, pour produire un flux d'air climatisé (IL), et comprenant au moins un conduit d'écoulement (4a à 4j) dans lequel au moins une soufflante auxiliaire (6) est disposée côté sortie d'écoulement,
**caractérisé en ce que** le conduit d'écoulement (4e, 4j) est divisé en au moins deux conduits partiels (TK) où, pour chaque conduit partiel (TK), une soufflante auxiliaire associée (6) ou bien au moins une roue mobile auxiliaire de soufflante est disposée côté sortie d'écoulement.

2. Dispositif selon le préambule de la revendication 1,
**caractérisé en ce que** le conduit d'écoulement (4e, 4j) est configuré comme un conduit à chambres multiples et, pour chaque conduit de chambre (KK), une soufflante auxiliaire associée (6) ou bien au moins une roue mobile auxiliaire de soufflante est disposée côté sortie d'écoulement.

3. Dispositif selon la revendication 1, où le conduit d'écoulement (4a à 4j) débouche dans au moins une sortie d'écoulement (5a à 5m) menant à l'habitacle (IR), et la soufflante auxiliaire (6) est disposée dans la zone de la sortie d'écoulement (5j).

4. Dispositif selon la revendication 1 ou 3, où le conduit d'écoulement (4e, 4j) est divisé en au moins deux conduits partiels (TK), par une paroi de séparation (TW) élastique, déformable, pliable et / ou mobile.

5. Dispositif selon l'une quelconque des revendications 1 à 4, où un élément mélangeur, en particulier une chambre de mélange (MK2), est montée en aval de la soufflante auxiliaire (6).

6. Dispositif selon la revendication 5, où l'élément mélangeur est disposé entre la soufflante auxiliaire (6) et la sortie d'écoulement (5j).

7. Dispositif selon l'une quelconque des revendications 1 à 6, où la soufflante auxiliaire (6) peut être activée et / ou réglée selon les besoins.

8. Dispositif selon l'une quelconque des revendications 2 à 7, où la sortie d'écoulement (5h à 5m) débouche dans la zone arrière, en particulier dans la zone des sièges arrière de l'habitacle (IR).

9. Dispositif selon l'une quelconque des revendications 1 à 8, où la soufflante auxiliaire (6) peut être actionnée de façon centrale ou locale, en particulier depuis la zone des sièges arrière.

10. Dispositif selon l'une quelconque des revendications 1 à 9, où au moins un élément de commande d'écoulement (7) est disposé dans le conduit d'écoulement (4e, 4j).

11. Dispositif selon la revendication 10, où l'élément de commande d'écoulement (7) est disposé, de façon mobile, entre une première position (S3) ouvrant complètement le conduit d'écoulement (4e, 4j) pour un flux d'air chaud, et une deuxième position (S2) ouvrant complètement le conduit d'écoulement (4e, 4j) pour un flux d'air froid.

12. Dispositif selon la revendication 10 ou 11, où l'élément de commande d'écoulement (7) est mobile dans une position intermédiaire (S1) prévue pour un guidage séparé de flux d'air froid et de flux d'air chaud, dans le conduit d'écoulement (4e, 4j).

13. Dispositif selon l'une quelconque des revendications 1 à 12, où une boîte de climatisation (9) est disposée sur le conduit d'écoulement (4e), côté sortie d'écoulement.

14. Dispositif selon la revendication 13, où il est prévu un conduit d'écoulement (4j) monté en dérivation du conduit d'écoulement (4e) et servant à la climatisation de la boîte de climatisation (9).

15. Dispositif selon la revendication 14, où la soufflante auxiliaire (6) est disposée, dans le conduit d'écoulement (4e), en amont du conduit d'écoulement (4j) monté en dérivation.

16. Dispositif selon l'une quelconque des revendications 13 à 15, où un élément mélangeur associé, en particulier une chambre de mélange (MK2), prévu pour la boîte de climatisation (9), est disposé, côté sortie d'écoulement, dans le conduit d'écoulement (4e), en particulier dans la zone du conduit d'écoulement (4j) monté en dérivation.

17. Dispositif selon l'une quelconque des revendications 13 à 16, où la boîte de climatisation (9) est conçue comme une boîte de maintien à température froide et / ou chaude.

18. Dispositif selon l'une quelconque des revendications 1 à 17, où au moins un conduit d'écoulement (4a à 4j) est configuré en étant thermiquement isolé.
